## Europäisches Patentamt

(19) **European Patent Office**

**Office européen des brevets**

(11) Publication number: **0 254 379**
**B1**

---

(12) **EUROPEAN PATENT SPECIFICATION**

(45) Date of publication of the patent specification:
**31.10.90**

(21) Application number: **87201776.9**

(22) Date of filing: **26.04.83**

(60) Publication number of the earlier application in accordance
with Art. 76 EPC: **0093570**

(51) Int. Cl.⁵: **F22B 21/36, F22B 31/04,**
**F22B 37/48, F22B 37/14,**
**F22D 1/04, F22G 7/14,**
**F28G 7/00, F23J 3/02**

---

(54) **Boilers systems.**

---

(30) Priority: **03.05.82 US 374358**

(43) Date of publication of application:
**27.01.88 Bulletin 88/4**

(45) Publication of the grant of the patent:
**31.10.90 Bulletin 90/44**

(84) Designated Contracting States:
**CH DE FR GB IT LI SE**

(56) References cited:
**DE-A- 3 022 880**
**DE-C- 172 734**
**DE-C- 548 343**
**FR-A- 1 080 140**
**FR-A- 2 263 487**
**US-A- 2 758 574**
**US-A- 2 809 615**
**US-A- 2 893 829**
**US-A- 2 976 858**
**US-A- 3 110 289**
**US-A- 3 310 037**
**US-A- 3 835 817**

**WÄRME, vol. 85, no. 6, December 1979, pages 121-125,**
**K. VON PACZKOWSKI: "Der Kessel als Bestandteil**
**einer Müllverbrennungsanlage seine Entwicklung, sein**

(73) Proprietor: **THE BABCOCK & WILCOX COMPANY,**
**1010 Common Street, P.O. Box 60035, New Orleans,**
**Louisiana 70160(US)**

(72) Inventor: **Seifert, Thomas P., 706 Woodland Avenue,**
**Wadsworth Ohio 44281(US)**
Inventor: **Longfield, Warren E., 7812 Hartman Road,**
**Wadsworth Ohio 44281(US)**

(74) Representative: **Cotter, Ivan John et al, D. YOUNG &**
**CO. 10 Staple Inn, London WC1V 7RD(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to boiler systems and particularly, but not exclusively, to boiler systems for furnaces which are capable of burning, in addition to conventional fuel, municipal solid waste or kraft black liquor of the paper industry.

Such boiler systems may include a superheater and an economiser in a convection pass downstream of a combustion chamber. An additional boiler assembly may also be provided between the superheater and the economiser. It is known to provide a plurality of steam and water drums, which, in particular, are connected to steam generating tubes for receiving a steam/water mixture and separating the mixture into a steam supply and a water supply.

German Patent Application Publication No. DE-A 3 022 880 discloses a single drum all-welded boiler system for a furnace having a combustion chamber and a convection pass downstream of the combustion chamber and connected to the combustion chamber in a transition area, the system comprising: a superheater disposed in the transition area and having an inlet and an outlet; an economiser disposed in the convection pass and having an inlet and an outlet; a boiler disposed in the convection pass between the economiser and the superheater; and a single steam drum having at least one inlet connected to the economiser outlet and at least one outlet connected to the superheater inlet, the drum being located in an area not exposed to combustion gas flow.

Particular problems occur when dealing with boiler systems for burning kraft liquors and solid waste in that inordinate amounts of soot and other impurities are generated which tend to foul heat transfer tubing of the superheaters, boilers and economisers.

Particularly in view of rising energy costs, it has become increasingly interesting to utilise such wastes to generate steam. This interest has resulted in the demand for higher steam pressures and temperatures with extended superheater control ranges.

In addition to the fouling problems in burning kraft liquors, water can leak into the smelt bed formed at the bottom of the furnace chamber, which can cause severe explosion and fire problems due to smelt-water reactions. Close quality control is thus required in the manufacture and construction of pressure parts for such boiler systems.

Another problem arises, in particular, with the burning of municipal solid wastes, in that excess soot and ash material must be dislodged from tubes of heat transfer surface.

According to the invention there is provided a single drum all-welded boiler system for a furnace having a combustion chamber and a convection pass downstream of the combustion chamber and connected to the combustion chamber in a transition area, the system comprising:

a superheater disposed in the transition area and having an inlet and an outlet;

an economiser disposed in the convection pass and having an inlet and an outlet; and

a single steam drum having at least one inlet connected to the economiser outlet and at least one outlet connected to the superheater inlet, the drum being located in an area not exposed to combustion gas flow; characterised in that:

the superheater comprises a plurality of vertically extending tubes arranged in a plurality of aligned rows; and

the system includes rapping means for applying impacts to the superheater tubes, the rapping means comprising first lugs and second lugs configured with different but complementary and mutually engageable contacting surfaces, each tube of each row having connected thereto a first lug on one side and a second lug on the opposite side such that the tubes in each row are connected together via the first and second lugs, the rapping means further including an impact member at one end of each row and a ram movable to strike each impact member.

Preferred embodiments of the present invention described hereinbelow provide boiler systems and furnaces which have various improved characteristics and are particularly suited for the burning of waste fuels such as municipal solid waste and kraft liquors.

The single drum employed in the preferred embodiments has forged steel connections which do not require rolling and seal welding.

The superheater of the preferred embodiments is designed with multiple steam flow paths with high steam mass flow to provide protection against overheating of the tubes. The smaller boiler module cross-section also permits extension of the superheater surface into areas previously occupied by the type of boiler banks utilising two steam and water drums.

Boiler and economiser modules of the preferred embodiments are designed for the upflow of fluid at all times. The ends of a lower header of the boiler module are provided with flanged sections which permit examination for potential deposition of contaminants in the saturated water circuit.

An improved arch construction in the furnace chamber is also provided, in the preferred embodiments, in the upper region of the furnace and below the superheater.

The rapping means is suitable for dislodging soot and ash from the tubes, with the advantageous retention of a small amount of ash to reduce corrosion of the tubes.

In the preferred embodiments, a boiler tube assembly is arranged between the economiser and the superheater in the convection pass with both the boiler and economiser being fed from below for an upward flow of fluid therethrough, an arch member is provided in the combustion chamber for improved gas flow and temperature distribution entering the superheater, and elongate vertical heat transfer surface is provided to facilitate cleaning and disposal of deposits.

The invention will now be further described, by way of illustrative and non-limiting example, with reference to the accompanying drawings, in which:

Figure 1 is an outline of a one-drum boiler system embodying the invention;

Figure 1a is a schematic top view showing a steam flow path of a superheater used in the embodiment of Figure 1;

Figure 2 is a view similar to Figure 1 of a different one-drum boiler system embodying the invention;

Figure 2a is a schematic top view of a roof tube arrangement used in the embodiment of Figure 1;

Figure 3 is a partial side view of a superheater of the boiler system, showing rapping means used to dislodge soot and ash;

Figure 4 is a plan view of the rapping means along a line 4-4 of Figure 3;

Figure 5 is a rear view of the rapping means along a line 5-5 of Figure 3;

Figure 6 is a perspective view showing tube modules used for an economiser and boiler of a system embodying the invention; and

Figure 7 is an enlarged side elevational view showing a preferred embodiment of the rapping means.

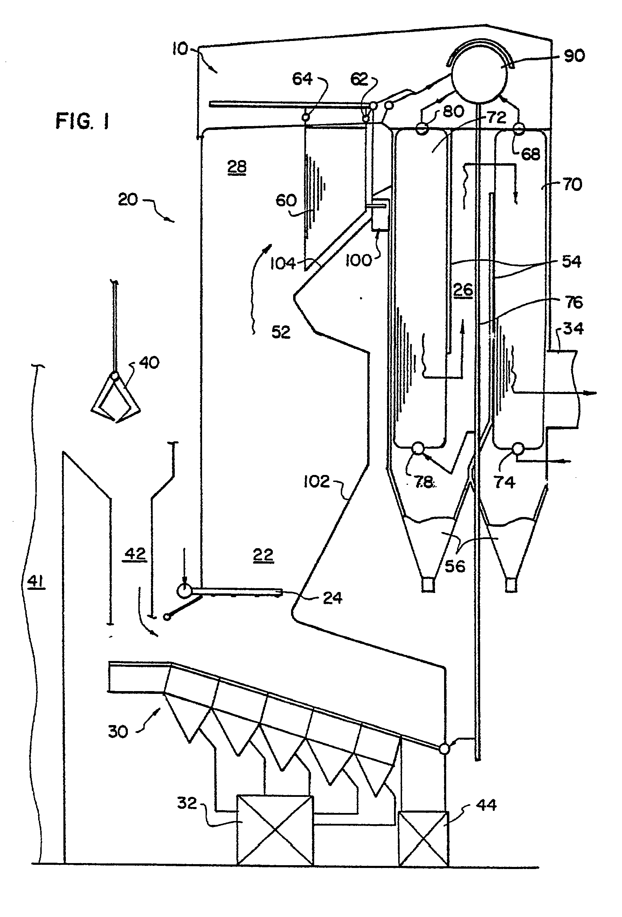

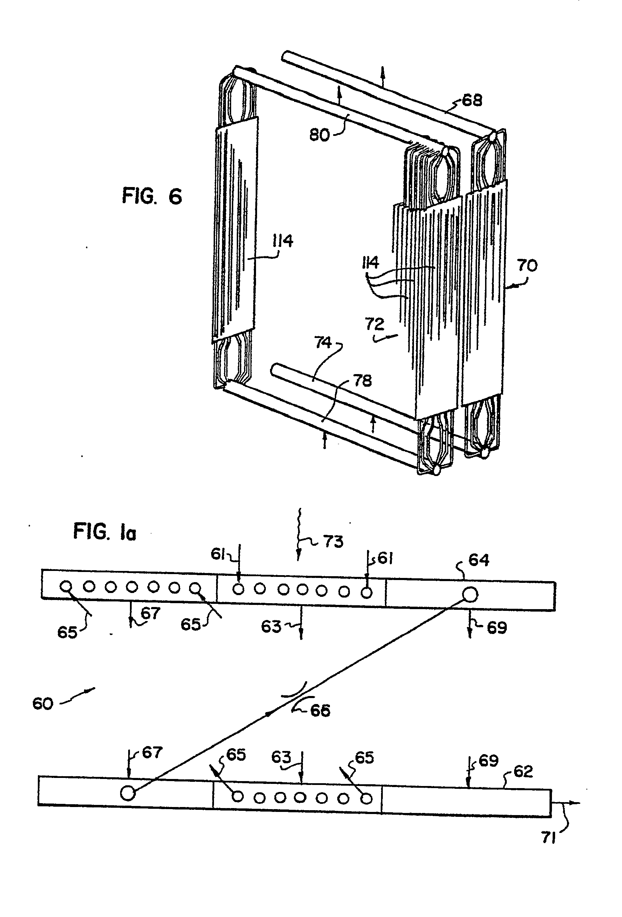

Referring to the drawings, Figure 1 shows a one drum boiler system 10 and a furnace 20. The furnace 20 includes combustion means which is capable of burning various fuels. In the embodiment shown the combustion means 30 is arranged to burn municipal solid waste which is supplied, for example, by a grapple 40 which transfers the municipal solid waste from a bin 41 into a chute 42 from which it is transferred to combustion means in the form of a stoker 30. The stoker 30 is provided, in known fashion, with air supply means 32 for igniting and burning the waste. The furnace 20 includes a combustion chamber 22 having a lower end which receives overfire air via a supply means 24. A convection pass 26 downstream of the combustion chamber 22 includes an exhaust gas outlet 34 which, in known fashion, may be connected to pollution control equipment and/or a stack.

In the case where municipal solid waste is to be burned, the furnace also includes a quenching basin 44 which receives molten unburned material.

Hot gases produced in the combustion chamber 22 rise in the direction of an arrow 52 through a transition area 28, where the combustion chamber is connected to the convection pass 26, and into the convection pass. In the embodiment shown, the convection pass 26 includes a plurality of baffle walls 54 for directing the exhaust gases in a serpentine path through the convection pass. Thus, collection hoppers 56 may be provided for collecting soot at the bottom of the convection pass 26.

The boiler system 10 includes an economiser or economiser module 70 disposed in the convection pass 26. Water is supplied to a bottom inlet header 74 of the economiser 70. The economiser 70 comprises a module of heat transfer tubes which will be described later in greater detail. Water flow is upward through the tubes to an outlet header 68 and thence to a drum 90.

Water from the drum 90 is fed through a downcomer 76 to supply lower furnace wall headers and to supply a generating bank or boiler generating module 72 through a lower header 78. Fluid flow is upward through the tubes to an upper header 80 and thence to the drum 90.

The boiler system 10 also comprises a superheater 60 composed of multiple tube sections interconnecting front and rear headers 64 and 62, respectively. Referring to Figure 1a, steam enters a centre section of the front header 64 through multiple connections 61 from the steam drum 90. Steam then flows rearwardly, as indicated by arrows 63, in the direction of gas flow, which is indicated by an arrow 73, and enters a centre section of the rear header 62. Multiple external connections 65 then conduct the steam to a side section of the front header 64 from which the flow is again rearward, as indicated by arrows 67, entering a side section of the rear header 62. Flow is then through external piping to an attemperator 66 and then to an opposite side section of the front header 64. Flow is then again rearward, as indicated by arrows 69, to the rear header 62 from which it exits to a point of use as indicated by an arrow 71.

Referring again to Figure 1, rapping means 100 is provided for rapping the tubes of the superheater 60 to free the tubes of undesirable deposits. Such rapping means is particularly advantageous where municipal solid waste is to be burned, due to its high content of impurities. The rapping means 100 is more fully described later.

The combustion chamber 22 of the furnace 20 is provided with a first arch structure 102 to improve combustion characteristics in the zone immediately above the stoker 30. A second arch structure 104 is provided in the transition area 28 below the superheater 60 for improved gas flow and gas temperature distribution through the superheater.

The positioning of the steam drum 90 in a remote area above the convection pass 26 and not exposed to combustion gas flow also permits the use of all-welded shop assembled modular tube arrangements for the economiser 70 and generating bank 72.

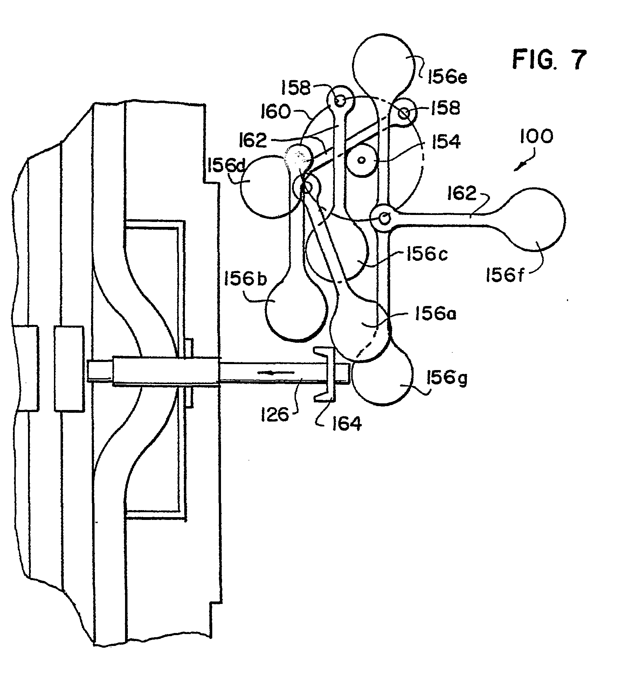

Referring to Figure 6, the economiser module 70 and boiler generating module 72 are of duplicate design. The tubes 114 are 51 mm (2 inches) in outside diameter and are welded to both the top and bottom headers. The vertical runs of the tubes 114 have a back spacing of 190 mm (7.5 inches), and 63 mm (2.5 inches) wide fins are welded on each side of tubes along the vertical run with a 13 mm (0.5 inch) gap between fins. Any desired number of duplicate modules can be provided in the appropriate part of the convection pass, to provide a boiler bank or economiser as needed to suit job requirements.

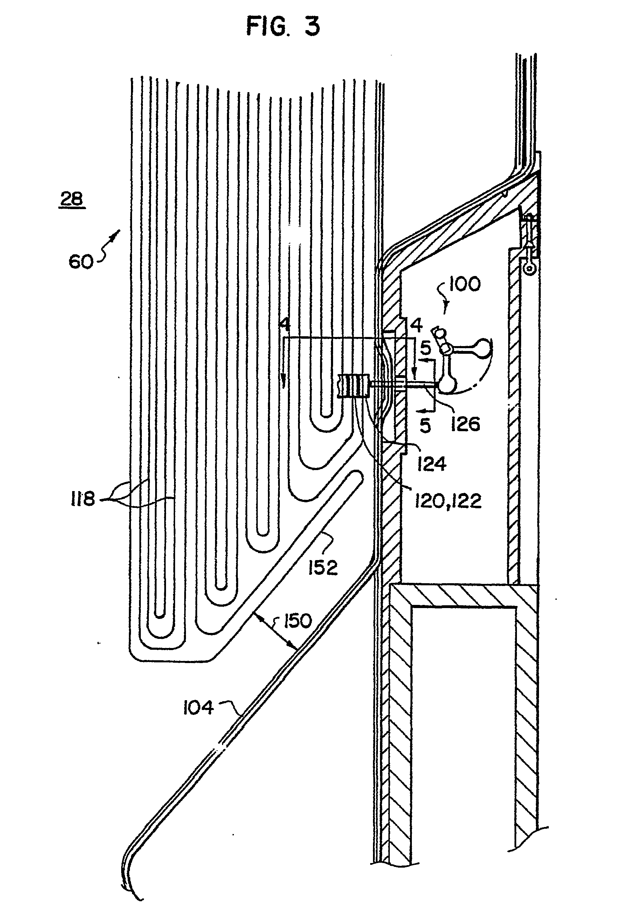

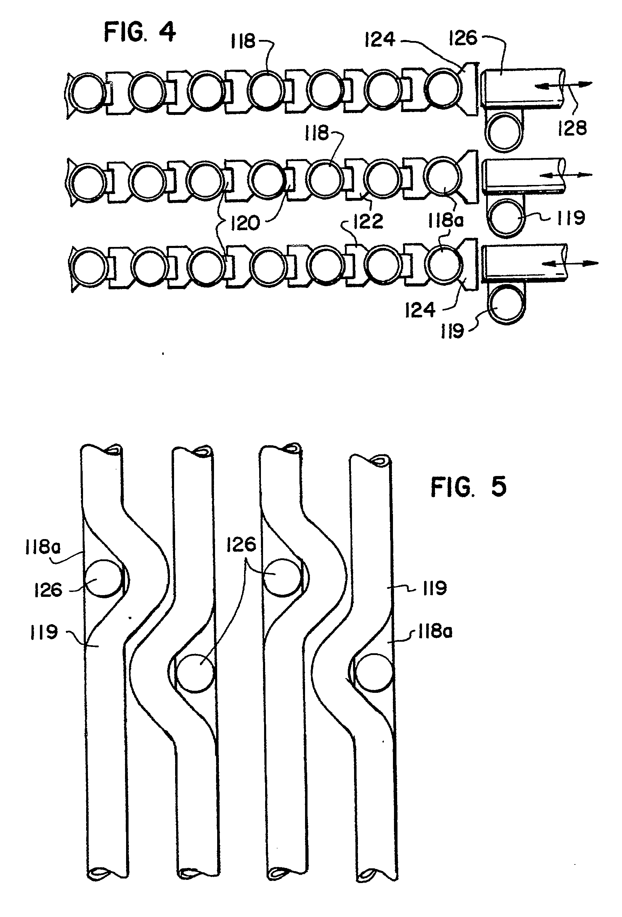

Figures 3, 4 and 5 show details of the superheater tube rapping means 100. Near the lower end of the superheater 60, only part of which is shown in Figure 3, rows of tubes 118 are provided with aligned lugs 120, 122, only one pair being illustrated. As best shown in Figure 4, each tube 118 includes a rearwardly facing lug 120 and a forwardly facing lug 122. Each rearwardly facing lug 120 of one tube 118 is engaged with and abuts a forwardly facing lug 122 of an adjacent tube 118, the rearwardly facing lugs 120 being configured with different but complementary and mutually engageable surfaces with respect to those of the forwardly facing lugs 122. On a rearmost tube 118a there is provided an impact body 124 which is larger than the lugs 120, 122 and arranged to receive an impact from a ram 126. Each row of tubes 118 is provided with its own set of lugs and impact body, with the lugs and impact bodies of one row being offset in a vertical direction with respect to those of an adjacent row to facilitate the rapping of every row of tubes. An outer and thus accessible set of tubes 119 is provided without bosses or an impact body and is curved, as shown in Figure 5, to expose the underlying impact bodies 124 to the rams 126. The rams 126 can be reciprocated in the direction of arrows 128 to the impact bodies 124 by any suitable means as illustrated and described in connection with Figure 7.

Access to the rams 126 is provided from the rear of the superheater 60. It has been found that the use of a rapping operation to dislodge soot and foreign matter from the tubes 118 advantageously leaves on the tubes a thin film of ash which acts as a corrosion resisting agent.

Referring again to Figure 3, another innovation in design of this steam generating unit is unusual superheater circuitry wherein one loop, 152, is extended rearwardly over the full depth of the superheater 60 to maintain the tubes in alignment through proper ties, not shown, during the rapping operation. Adequate space 150 is provided between the superheater 60 and the arch structure (arch tubes) 104 to allow for falling ash after rapping and downward disposal to the stoker 30. A feature that should be noted is that the arch structure (furnace arch) 104 and the arrangement of the superheater 60 eliminate gas by-passing the superheater surface, notwithstanding the large space 150 below the superheater.

Referring to Figure 7, the rapping means 100 comprises a shaft 154 which can be rotated relatively slowly and which carried one or more hammers 156. Each hammer 156 is connected at a pivot connection 158 to an arm connected to the shaft 154. With rotation of the shaft 154, the pivot connection 158 moves in a circular path 160. Each hammer 156, having a hammer arm 162, moves sequentially into a series of positions shown at 156a to 156g. At the position 156g, the hammer has just struck a ram 126. At the position 156a, the hammer passes a support 164 which slidable receives a ram 126. In the positions 156b and 156c, the hammer hangs free. In the position 156d, the hammer is rotated, with the aid of its arm 162, about and over the top of the shaft 154. At the position 156f, the hammer is shown in free fall an instant before it strikes the ram 126.

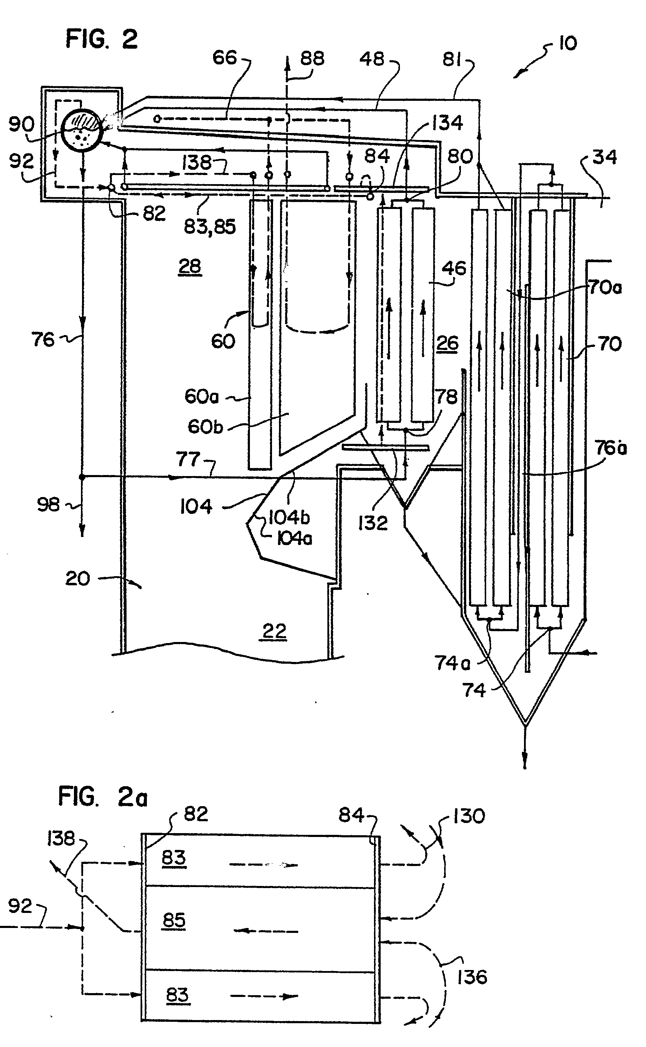

Figures 2 and 2a, in which similar reference numerals are utilised to designate similar parts, partially show a boiler system for a kraft recovery unit which burns kraft liquor as fuel. A lower furnace for burning kraft liquor is similar to a unit shown and described in our US Patent No. 2 893 829 (J.E. Hutton). The unit is also adaptable for use as a power boiler burning coal, gas or oil with modifications to the lower furnace. Such units are used in the pulp and paper industry for the generation of steam used in the pulping process. As with the municipal solid waste burning furnaces, the kraft recovery unit of Figure 2 requires special considerations.

For ease of understanding, solid lines are utilised to designate flow paths of water or a water/steam mixture, and dotted lines are utilised to designate the flow of steam. Figure 2a is a schematic top view of roof tubes of the furnace.

An economiser inlet header 74 supplies water to the bottom of a first stage economiser 70. Water flow is upward in the module and then downward through external lines 76a to a lower header 74a of a second stage economiser 70a. Water flow is again upward in the module and then through a line 81 to the steam drum 90.

Water is supplied from the steam drum 90 to two downcomers 76, only one of which is shown. The downcomers 76 supply water through a line 77 to a lower header 78 of boiler modules 46, which are disposed in the convection pass 26 between the superheater 60 and the economisers 70 and 70a. Fluid flow is upward in the boiler modules 46 and is delivered over a line 48 to the steam drum 90. As shown by an arrow 98, water is also provided to lower wall headers of the furnace (not shown). Water and steam rise through the furnace walls and are discharged to upper wall headers and thence through risers to the steam drum 90.

Steam flows from the drum 90 through saturated connections 92 to a front roof header 82. As is more clearly shown in Figure 2a, steam flow is then rearward via both outside quarters 83 of the roof tubes to a rear roof header 84. From the roof header 84, flow is then downward via external connections 130 to lower side wall headers 132. Steam flow is upward through the side wall tubes to upper side wall headers 134. Flow is then supplied through external connections 136 to the centre of the rear roof header 84. Steam then flows forwardly in the central one-half 85 of the roof tubes, back to the front roof header 82.

Referring again to Figure 2, steam is supplied to a primary superheater 60a from the centre of the front roof header 82 through connecting tubes 138. From the primary superheater 60a the steam flows through the attemperator 66 and then through a secondary superheater 60b, exiting through a line 88 to a point of use.

The boiler and economiser modules can be arranged as single or multiple units. The features of permitting the use of any required number of modules and the ability to vary the division between boiler and economiser heating surface gives the designer new flexibility – it permits the optimising of surface division as a function of operating pressure and avoids an undesirable steaming economiser.

As with the embodiment of Figure 1, the economiser and boiler consist of shop-assembled, welded modules as illustrated in Figure 6.

According to another improvement, the arch member 104 for the superheaters can be designed with an upstream section 104a which has been found advantageously to be inclined at about 50° to the horizontal and a downstream section 104b which has been found advantageously to be inclined at about 30° to the horizontal for gas flow and temperature distribution through the superheater 60.

## Claims

1. A single drum all-welded boiler system (10) for a furnace (20) having a combustion chamber (22) and a convection pass (26) downstream of the combustion chamber and connected to the combustion chamber in a transition area (28), the system (10) comprising:
   a superheater (60) disposed in the transition area (28) and having an inlet and an outlet;
   an economiser (70) disposed in the convection pass (26) and having an inlet and an outlet; and
   a single steam drum (90) having at least one inlet connected to the economiser outlet and at least one outlet connected to the superheater inlet, the drum being located in an area not exposed to combustion gas flow;
   characterised in that:
   the superheater (60) comprises a plurality of vertically extending tubes (118) arranged in a plurality of aligned rows; and
   the system includes rapping means (100) for applying impacts to the superheater tubes (118), the rapping means (100) comprising first lugs (120) and second lugs (122) configured with different but complementary and mutually engageable contacting surfaces, each tube (118) of each row having connected thereto a first lug (120) on one side and a second lug (122) on the opposite side such that the tubes (118) in each row are connected together via the first and second lugs (120, 122), the rapping means further including an impact member (124) at one end of each row and a ram (126) movable to strike each impact member.

2. A system according to claim 1, wherein each row is aligned in a flow direction in the transition area (28), each impact member (124) is positioned on a downstream end of each row in said flow direction, and each ram (126) is positioned at a downstream end of the transition area for striking each impact member.

3. A system according to claim 1 or claim 2, wherein the convection pass (26) and the economiser (70) are elongate in the vertical direction and the economiser (70) comprises a plurality of tubes (114) extending vertically between the economiser inlet and outlet.

4. A system according to claim 3, wherein the economiser inlet is at the bottom of the plurality of tubes (114) and the economiser outlet is at the top of the plurality of tubes, and wherein at least one header (68, 74) is connected to the plurality of tubes (114) at each of the economiser inlet and outlet.

5. A system according to claim 4, wherein the economiser (70) comprises a plurality of modular units each comprising a plurality of tubes (114) welded at the bottom to a common inlet header (74) and at the top to a common outlet header (68).

6. A system according to any one of the preceding claims, wherein the tubes (114) in both boiler and economiser units (72, 70) include fins welded on each side of the tubes parallel to the direction of gas flow.

7. A system according to any one of the preceding claims, wherein the furnace includes a stoker (30) and an arch member (102) extending into the combustion chamber (22) for improved combustion characteristics in a zone immediately above the stoker (30).

8. A system according to any one of the preceding claims, wherein the combustion chamber includes an arch member (104) extending into the combustion chamber (22) immediately below the transition area (28), the superheater (60) being disposed above the arch member (104).

9. A system according to claim 8, wherein the arch member (104) includes a portion (104b) that is downstream in a direction of flow of the transition area and is disposed at an angle of about 30° to the horizontal, and an upstream portion (104a) that is connected to the downstream portion (104b) and disposed at an angle of about 50° to the horizontal.

10. A system according to any one of the preceding claims, wherein the boiler modular unit (72) and the economiser modular unit (70) are of duplicate design.

## Patentansprüche

1. Ganz geschweißtes Kesselsystem (10) mit einem Einzelkessel für einen Ofen (20), der eine Brennkammer (22) und einen Konvektionsdurchlauf (26) stromabwärts von der Brennkammer hat, welcher mit der Brennkammer in einem Übergangsbereich (28) verbunden ist, wobei das System (10) aufweist:
   einen Überhitzer (60), welcher in dem Übergangsbereich (28) angeordnet ist und einen Einlaß sowie einen Auslaß hat,
   einen Abgasvorwärmer (70), welcher in dem Konvektionsdurchlauf (26) angeordnet ist und einen Einlaß sowie einen Auslaß hat, und
   einen einzelnen Dampfkessel (90), der zumindest einen Einlaß hat, welcher mit dem Abgasvorwärmerauslaß verbunden ist, und zumindest einen Auslaß hat, der mit dem Überhitzereinlaß verbunden ist, wobei der Kessel in einem Bereich angeordnet ist, welcher nicht dem Strom des Verbrennungsgases ausgesetzt ist,
   dadurch gekennzeichnet, daß
   der Überhitzer (60) eine Mehrzahl von sich in vertikaler Richtung erstreckenden Rohren (118) aufweist, welche in einer Mehrzahl von ausgerichteten Reihen angeordnet sind, und
   das System eine Einrichtung (100) zum Losklopfen aufweist, um den Überhitzerrohren (118) Stöße zu versetzen, wobei die Einrichtung (100) zum Losklopfen erste Böcke (120) und zweite Böcke (122) aufweist, welche mit unterschiedlichen, jedoch komplementären und wechselseitig miteinander eingreiffähigen Berührungsflächen gestaltet sind, wobei jedes Rohr (118) jeder Reihe mit einem ersten Bock (120) auf einer Seite und einem zweiten Bock (122) auf der gegenüberliegenden Seite derart verbunden ist, daß die Rohre (118) in jeder Reihe über die ersten und zweiten Böcke (120, 122) miteinander verbunden sind, wobei die Losklopfeinrichtung weiterhin ein Schlagteil (124) an einem Ende jeder Reihe und eine Ramme (126) aufweist, die so bewegbar ist, daß sie auf jedes der Schlagteile stößt.

2. System nach Anspruch 1, wobei jede Reihe in Strömungsrichtung in dem Übergangsbereich (128) ausgerichtet ist, jedes Schlagteil (124) an einem stromabwärtigen Ende des Übergangsbereiches angeordnet ist, um jede Ramme (126) an einem stromabwärtigen Ende des Übergangsbereiches angeordnet ist, um jedes Schlagteil anzustoßen.

3. System nach Anspruch 1 oder 2, wobei der Konvektionsdurchlauf (26) und der Abgasvorwärmer (70) in vertikaler Richtung länglich sind und wobei der Abgasvorwärmer (70) eine Mehrzahl von Rohren (114) aufweist, die sich in vertikaler Richtung zwischen dem Abgasvorwärmereinlaß und -auslaß erstrecken.

4. System nach Anspruch 3, wobei der Abgasvorwärmereinlaß sich am Boden der Mehrzahl von Rohren (114) und der Abgasvorwärmerauslaß sich an der Spitze der Mehrzahl von Rohren befindet und wobei zumindest ein Verteiler (68, 74) mit der Mehrzahl von Rohren (114) jeweils am Abgasvorwärmereinlaß und am -auslaß angeschlossen ist.

5. System nach Anspruch 4, wobei der Abgasvorwärmer (70) eine Mehrzahl von modularen Einheiten aufweist, die jeweils eine Mehrzahl von Rohren (114) aufweisen, welche am Boden mit einem gemeinsamen Einlaßverteiler (74) und am oberen Ende mit einem gemeinsamen Auslaßverteiler bzw. -sammler (68) verschweißt sind.

6. System nach einem der vorstehenden Ansprüche, wobei die Rohre (114) sowohl im Kessel als auch in den Abgasvorwärmereinheiten (72, 70) Rippen aufweisen, welche auf jeder Seite der Rohre parallel zur Richtung der Gasströmung angeschweißt sind.

7. System nach einem der vorstehenden Ansprüche, wobei der Ofen einen Heizer (30) und ein Bogenteil (102) hat, welches sich in die Brennkammer (22) hinein erstreckt für verbesserte Verbrennungseigenschaften in einer Zone unmittelbar oberhalb des Heizers (30).

8. System nach einem der vorstehenden Ansprüche, wobei die Verbrennungskammer ein Bogenteil (104) aufweist, welches sich in die Verbrennungskammer (22) unmittelbar unter dem Übergangsbereich (28) erstreckt, – wobei der Überhitzer (60) oberhalb des Bogenteiles (104) angeordnet ist.

9. System nach Anspruch 8, wobei das Bogenteil (104) einen Abschnitt (104b) aufweist, welcher in Richtung der Strömung des Übergangsbereiches stromabwärts liegt und unter einem Winkel von etwa 30° relativ zur Horizontalen angeordnet ist, sowie einen stromaufwärtigen Abschnitt (104a) aufweist, welcher mit dem stromabwärtigen Abschnitt (104b) verbunden ist und unter einem Winkel von etwa 50° zur Horizontalen angeordnet ist

10. System nach einem der vorstehenden Ansprüche, wobei die modulare Einheit (72) des Kessels und die modulare Einheit (70) des Abgasvorwärmers eine Doppelgestalt haben.

## Revendications

1. Evaporateur (10) entièrement soudé à un tambour unique pour un four (20) possédant une chambre de combustion (22) et un passage de convection (26) en aval de la chambre de combustion et relié à la chambre de combustion dans une zone de transition (28), l'évaporateur (10) comportant:
un surchauffeur (60) disposé dans la zone de transition (28) et possédant un orifice d'admission et un orifice de sortie;
un économiseur (70) disposé dans le passage de convection (26) possédant un orifice d'admission et un orifice de sortie; et
un unique tambour à vapeur (90) possédant au moins un orifice d'admission relié à l'orifice de sortie de l'économiseur et au moins un orifice de sortie relié à l'orifice d'admission du surchauffeur, le tambour étant situé dans une zone non exposée à l'écoulement des gaz de combustion; caractérisé en ce que:
le surchauffeur (60) comporte une pluralité de tubes (118) s' étendant verticalement disposés en une pluralité de rangées alignées; et
l'évaporateur comprend des organes de percussion (100) en vue d'appliquer des chocs aux tubes (118) du surchauffeur, les organes de percussion (100) comportant des premières pattes (120) et des secondes pattes (122) configurées avec des surfaces différentes mais complémentaires et pouvant venir en contact mutuel, à chaque tube (118) de chaque rangée étant rattachée une première patte (120) sur un côté et une seconde patte (122) sur le côté opposé, de telle sorte que les tubes (118) dans chaque rangée soient réunis par l'intermédiaire des premières et secondes pattes (120, 122), les organes de percussion comprenant en outre un élément de choc ( 124 ) à une extrémité de chaque rangée et un bélier (126) déplaçable pour frapper chaque élément de choc.

2. Evaporateur selon la revendication 1, dans lequel chaque rangée est alignée dans une direction d'écoulement dans la zone de transition (28), chaque élément de choc (124) est disposé sur une extrémité aval de chaque rangée dans ladite direction d'écoulement, et chaque bélier (126) est disposé à une extrémité aval de la zone de transition en vue de frapper chaque élément de choc.

3. Evaporateur selon la revendication 1 ou la revendication 2, dans lequel le passage de convection (26) et l'économiseur (70) sont allongés dans le sens vertical et l'économiseur (70) comporte une pluralité de tubes (114) s'étendant verticalement entre l'orifice d'admission et l'orifice de sortie de l'économiseur.

4. Evaporateur selon la revendication 3, dans lequel l'orifice d'admission de l'économiseur se trouve au bas de la pluralité de tubes (114) et l'orifice de sortie de l'économiseur se trouve au sommet de la pluralité de tubes, et dans lequel au moins un collecteur (68, 74) est relié à la pluralité de tubes (114) à chaque orifice d'admission et de sortie de l'économiseur.

5. Evaporateur selon la revendication 4, dans lequel l'économiseur (70) comporte une pluralité d'ensembles modulaires comportant chacun une pluralité de tubes (114) soudés à la base à un collecteur d'admission commun (74) et au sommet à un collecteur de sortie commun (68).

6. Evaporateur selon l'une quelconque des revendications précédentes, dans lequel les tubes (114) dans les deux ensembles de chaudière et d'économiseur (72, 70) comprennent des ailettes soudées sur chaque côté des tubes parallèles au sens d'écoulement du gaz.

7. Evaporateur selon l'une quelconque des revendications précédentes, dans lequel le four comprend un chargeur (30) et un arc (102) s'étendant dans la chambre de combustion (22) en vue d'améliorer les caractéristiques de combustion dans une zone immédiatement au-dessus du chargeur (30).

8. Evaporateur selon l'une quelconque des revendications précédentes, dans lequel la chambre de combustion comprend un arc (104) s'étendant dans la chambre de combustion (22) immédiatement au-dessous de la zone de transition (28), le surchauffeur (60) étant disposé au-dessus de l'arc (104).

9. Evaporateur selon la revendication 8, dans lequel l'arc (104) comprend une partie (104b) qui est en aval dans la direction d'écoulement de la zone de transition et est disposée selon un angle d'environ 30° par rapport à l'horizontale, et une partie amont (104a) qui est reliée à la partie aval (104b) et disposée selon un angle d'environ 50° par rapport à l'horizontale.

10. Evaporateur selon l'une quelconque des revendications précédentes, dans lequel l'ensemble modulaire de chaudière (72) et l'ensemble modulaire d'économiseur (70) sont de conception double.

FIG. 1

FIG. 6

FIG. Ia

FIG. 2

FIG. 2a

# FIG. 3

# FIG. 4

# FIG. 5

EP 0 254 379 B1

FIG. 7